(19)

Europäisches
Patentamt
European
Patent Office
Office européen
des brevets

(11) **EP 3 340 614 A1**

(12) **EUROPEAN PATENT APPLICATION**

(43) Date of publication:
**27.06.2018 Bulletin 2018/26**

(51) Int Cl.:
**H04N 5/915** (2006.01)      **H04N 5/04** (2006.01)
**H04N 5/232** (2006.01)

(21) Application number: **16306748.1**

(22) Date of filing: **21.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventor: **KELLER, Anton Werner
8048 Zürich (CH)**

(74) Representative: **Huchet, Anne
TECHNICOLOR
1-5, rue Jeanne d'Arc
92130 Issy-les-Moulineaux (FR)**

(54) **METHOD AND DEVICE FOR SYNCHRONIZING AUDIO AND VIDEO WHEN RECORDING USING A ZOOM FUNCTION**

(57)    A method and device for adaptively matching recorded audio signals to recorded video signals. The device includes an image sensor, at least one lens coupled to a focus control, at least one microphone and a processor. The processor adaptively matches audio signals recorded by the at least one microphone to video images recorded by the image sensor.

Fig. 2          Block Diagram (Camera or Camera section)

Printed by Jouve, 75001 PARIS (FR)

**Description**

**FIELD**

The proposed apparatus generally relates to audio and video synchronization and, more specifically, to synchronizing audio with video recorded using a zoom objective.

**BACKGROUND OF THE INVENTION**

Conventional video devices including consumer cameras and other mobile devices such as phones with cameras traditionally have microphones placed on a body of the device. When filming or recording a subject at a distance such as a few meters from the lens, a lag in the audio with respect to the video is noticeable due to a difference in propagation delay. For example, a distance of ten meters from the subject can account for a 33 ms delay. When recording, video using a wide-angle longshot, the audio delay appears normal. However, when recording video using a zoom function, delay between the audio and video is noticeable. Prior systems have been unable to account for such a delay by synchronizing the audio with the video when using a zoom function to make the subject appear closer than the actual distance from the lens.

What is needed is a device and method for synchronizing audio and video with respect to a focus distance of the video device when using a zoom function.

**SUMMARY**

The proposed apparatus relates to video recording devices, such as for example, a mobile phone with a camera and microphone. It will be appreciated that the proposed apparatus is not limited to any specific type of device and may be applied to any video recording device.

According to a first aspect of the disclosure, a device includes an image sensor, at least one lens coupled to a focus control, at least one microphone and a processor. The processor adaptively matches audio signals recorded by the at least one microphone with respect to video images recorded by the image sensor. The focus control provides a zoom factor. The zoom factor may be adjustable. The audio signal matching is based in the zoom factor.

In another embodiment, the processor includes an audio to zoom adaptation circuit that variably delays the audio signals with respect to the video images recorded by the image sensor, based on a distance for a subject of the video images from the device and a zoom factor of the at least one lens.

In another embodiment, the audio to zoom adaptation circuit includes a control circuit, an audio processor and a variable delay circuit. The control circuit is configured to receive a focus distance signal, the zoom factor signal and an input selection signal and generates a delay control signal and an audio mixing signal. The audio processor is configured to receive audio signals from the at least one microphone along with the mixing signal and generates a mixed audio signal. The variable delay circuit is configured to receive the mixed audio signal and the delay control signal and then delay the mixed audio signal based on the delay control signal.

In another embodiment, the delay of the audio signals with respect to the video images is varied based on the at least one lens performing a zoom operation.

In another embodiment, the processor is further configured to identify an audio source supplying the audio signals and determine a distance for the audio source from the device. Upon receipt of an input audio selection signal, the processor adaptively matches the audio signals to the video images based on the determined distance of the audio source.

In another embodiment, an input device is provided for receiving input selection signals. The input device may be one of a user interface, a keyboard, a touch screen, a mouse, a pointer and/or an eye tracker. The input device is used to select an object for which audio signals are to be delayed.

In another embodiment, the audio delay is varied based on air temperature and/or a medium in which the device is positioned.

In another embodiment, the audio source is recorded as a delayed audio signal or as an audio signal together with the audio delay or distance information.

In another embodiment, the device is a Plenoptic camera system configured so that at least two audio channels may be recorded with a different audio delay or playout information.

According to another aspect of the disclosure, a method is described in which a subject is brought into focus by an image sensor through at least one lens, video signals of the subject are recorded by the image sensor and audio signals are recorded by at least one microphone. A delay for the audio signals recorded by the at least one microphone is adaptively matched by a processor with respect to the video signals recorded by the image sensor.

In another embodiment, varying the delay for the audio signals with respect to the video signals recorded by the at least one microphone, includes determining a distance between the subject and the image sensor, and then variably delaying the audio signals with respect to the video signals based on the determined distance and a zoom factor for the at least one lens.

In another embodiment, the at least one microphone includes at least one of a front directional microphone, a front microphone and a side microphone. The step of varying the delay of the audio signals with respect to the video signals includes receiving a focus distance signal, a zoom factor signal and an input selection signal; generating a delay control signal and a mixing signal based on at least one of the focus distance signal, zoom factor signal and input selection signal; generating a mixed audio signal based on audio signals received from at least one of the front directional microphone, front microphone and side microphone and the mixing signal; and delaying the mixed audio signal based on the delay control signal.

In another embodiment, the step of varying the delay of the audio signals with respect to the video signals includes combining the delayed mixed audio signal and the video signal to form an audio/video signal.

In another embodiment, the step of varying the delay of the audio signals with respect to the video images is performed when the at least one lens is performing a zoom operation.

In another embodiment, when a source of the audio signals is at a different distance from the image sensor than the subject, the method further includes identifying the source of the audio signals, determining a distance between the source of the audio signals and the device upon receipt of an input audio selection signal and varying a delay of the audio signals to the video signals based on the determined distance between the source of the audio signals and the device.

At least parts of the methods of the disclosure may be computer implemented. Accordingly, embodiments may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the embodiments may take the form of a computer program product embodied in any tangible medium of expression having computer usable program code embodied in the medium.

Since embodiments can be implemented in software, at least parts of the methods can be embodied as computer readable code for provision to a programmable apparatus on any suitable carrier medium. A tangible carrier medium may comprise a storage medium as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RE signal.

## BRIEF DESCRIPTION OF THE DRAWINGS

These and other aspects, features and advantages of the present disclosure will be described or become apparent from the following detailed description of the preferred embodiments, which is to be read in connection with the accompanying drawings. The drawings include the following figures briefly described below:

FIGS. 1A-1D are exemplary depictions of different focusing situations encountered using a video device;
FIG. 2 is an exemplary block diagram of a video device in accordance with the present disclosure;
FIG. 3 is an exemplary block diagram of a digital signal processor used in the video device in accordance with the present disclosure;
FIG. 4 is a time depiction of an optical and acoustical focus process in accordance with the present disclosure;
FIG. 5 is a flow chart depicting a method of audio to zoom adaptation in accordance with the present disclosure; and
FIG. 6 is an illustration depicting sound source analysis in accordance with the present disclosure.

It should be understood that the drawings are for purposes of illustrating the concepts of the disclosure and are not necessarily the only possible configuration for illustrating the disclosure.

## DETAILED DESCRIPTION OF PREFERRED EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present arrangement provides a method and device for synchronizing audio and video when recording using a zoom function.

Modern photo cameras, including cameras on mobile devices such as phones, have increasingly extreme telephoto lenses (zoom objectives) and are able to record talking movies/video, so called "live shots" (pictures that contain video snippets of 3-5 seconds including sound) and Sound-Shots (a picture with up to nine seconds of sound). As these cameras become more advanced, they are able to record audio/video with greater clarity and record images from greater distances using zoom features. When using zoom features, cameras may include one or more different lenses such as a wide angle lens and a long shot lens. Alternatively, more than one camera, each having a separate image sensor and lens may be used. The further away the subject image being recorded is from the video device, the greater the delay in receiving any audio captured from the subject image and the more noticeable the offset between the audio and video portions of the recording. It thus becomes necessary to synchronize the recorded audio and video when using zoom features.

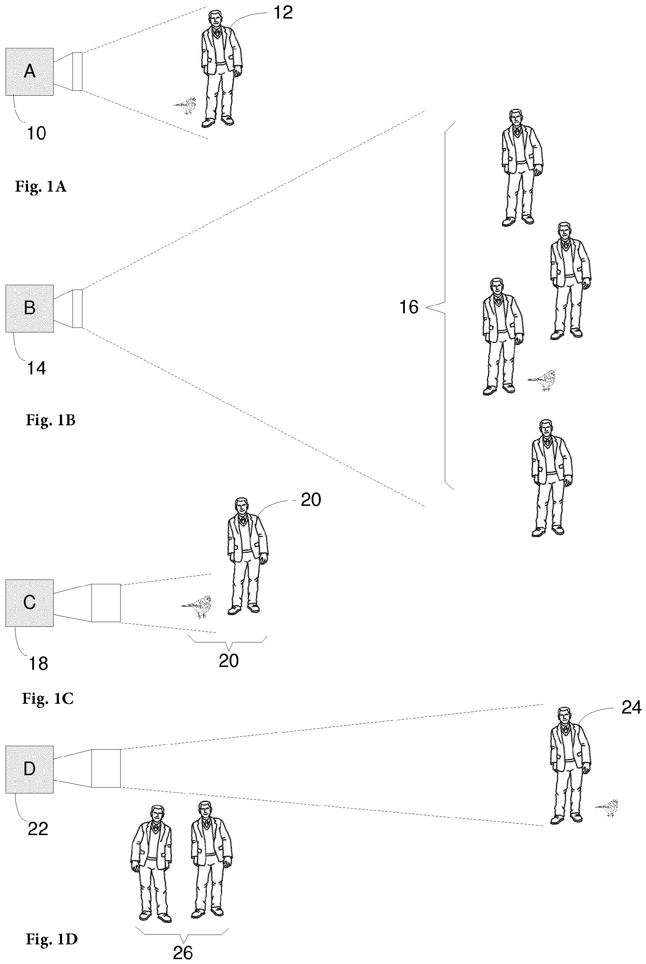

Depicted in Figs. 1A-1D are various scenarios in which cameras or mobile devices may record movies. The critical distances are exemplary and may vary for different applications. These scenarios are summarized in Table 1:

Table 1

| Figure | Style | Distance | Delay | Comments |
|--------|-------|----------|-------|----------|
| Fig. A | Wide angle shot | 1-3m | <10ms | No significant problem |
| Fig. B | Wide angle shot | 5-20m | 15-66ms | No significant problem, audiovisual habit is adopted to situations in which audio lags video |
| Fig. 1C | Tele shot, short range | 1-3m | <10ms | No significant problem |
| Fig. 1D | Long Shot | 5-20m | 15-66ms | The zoom function brings the subject very near causing an expectation that audio and video are well synchronized |

In Fig. 1A, a wide angle shot is taken. The video device 10 is shown at a short distance of 1-3 m from the subject 12 being recorded. At this distance the audio delay may be less than 10 ms and is virtually imperceptible to the human ear. Fig. 1B depicts a wide angle shot being taken of a subject 16 in the distance. The video device 14 is positioned at a distance of 5-20 m from the subject 16. At this distance the audio delay may be between 15-66 ms. As the subject 16 is viewed to be at a distance from the video device 14, the audio delay appears "normal" and thus synchronization is not necessary but may be desirable when the audio focus distance is manually selected. Use of a telephoto lens is shown in Fig. 1C. The video device 18 is shown with the subject 20 being positioned at a range of about 1-3 m therefrom. This distance from the video device 18 may produce an audio delay of less than 10 ms. The audio delay seems imperceptible and thus no synchronization between the audio and video signals would be necessary. In Fig. 1D, a telephoto lens is used for a long shot using a zoom function. The video device 22 is shown with the subject 24 at a distance of between 5-20 m therefrom. At this distance the delay in the audio reaching a microphone of the video device 22 may be between 15-66 ms. The zoom function creates the appearance that the subject 24 is much closer to the video device 22 than in actuality. The appearance of the subject 24 being closer to the video device 22 creates the expectation that the audio will not be delayed from and will be synchronized with the video. However, as the subject 24 is actually further away than perceived, there is a detectable delay in the audio with respect to the video making it necessary to synchronize the audio and video. Additionally, due to the distance of the subject 24 from the video device 22, the possibility of sound or "noise" surrounding the video device being captured by the video device 22 is possible. Fig. 1D shows people 26 positioned around the video device 22 creating "noise" that may also need to be filtered from the audio signal.

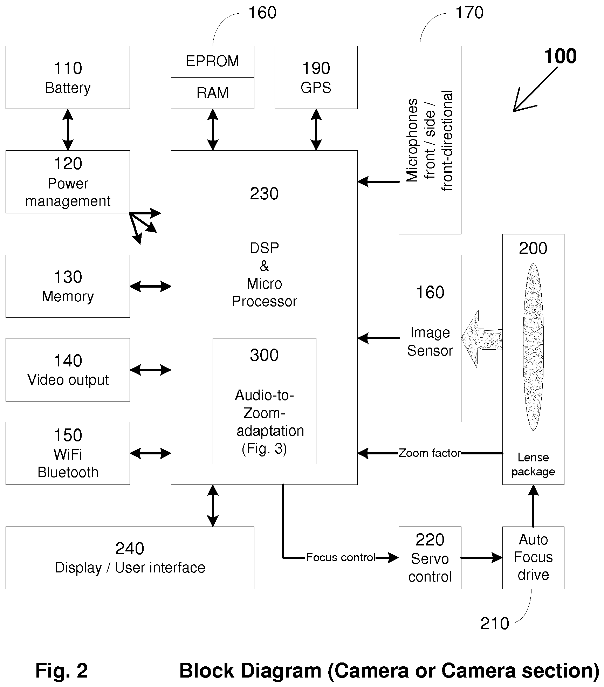

Figure 2 illustrates a block diagram of an exemplary device 100. The device 100 includes a battery 110, power management circuit 120, memory 130, video output 140, WiFi/Bluetooth circuit 150, an EPROM/RAM 160, microphone(s) 170, an image sensor 180, a Global Positioning System (GPS) 190, a lens package 200, an autofocus drive 210, a Servo control 220 and a Digital Signal Processor(DSP)/microprocessor 230. For displaying the signal captured by the image sensor as well for displaying a user interface a display 240 may be provided. Alternatively, the signal captured by the image sensor and/or a signal for displaying the user interface may be provided to a display device for display thereon. Each of these elements is standard within a video device 100 and each performs well known functions. Thus, these elements will not be further described within this application. Additionally, it should be understood that the elements set forth in Figure 2 are illustrative. The system 100 can include any number of elements and certain elements can provide part or all of the functionality of other elements. Other possible implementations will be apparent to one skilled in the art given the benefit of the present disclosure. Further, it is known that, for processing in conventional cameras and video devices, video processing takes more time than audio processing and thus, conventional devices must also account for the additional processing time for video by synchronizing the audio and video signals. In addition to the above mentioned standard elements within the video device 100, the exemplary video device 100 includes an Audio-to-Zoom adaptation control circuit 300 for synchronizing the audio signals with corresponding video signals to account for delay in audio signals related to the distance of the subject from the video device.

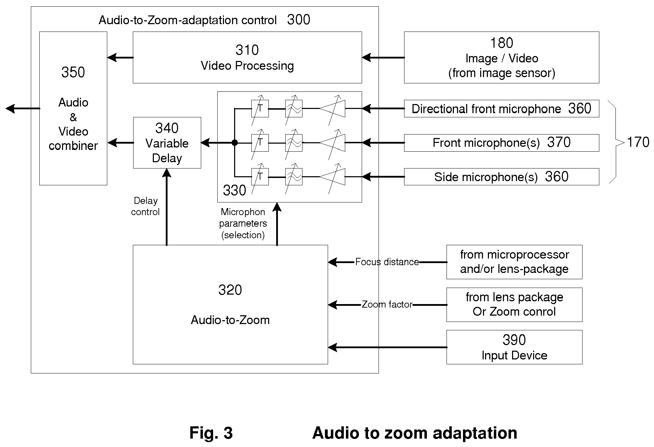

The Audio-to-Zoom adaptation control circuit 300 is shown in greater detail in Figure 3. As is shown in Figure 3 the Audio-to-Zoom adaptation control circuit 300 includes a video processing circuit 310, an audio-to-zoom circuit 320, an audio processor 330, a variable delay 340 and an audio/video combining circuit 350. The audio-to-zoom adaptation control circuit 300 may be implemented in the DSP 230 as shown in Figure 2. Alternatively, the audio-to-zoom adaptation control circuit 300 may be included within other circuitry of the video device 100 or be included within the video device 100 as a separate component connected to receive and process the requisite signals. The audio-to-zoom adaptation control circuit 300 receives at least three (3) main input signals for determining the audio delay.

1) **Focus distance:** This signal is derived from the autofocus signal or in a manual focus mode as a feedback signal from the lens package. There are several autofocus systems that do not alter the function of and may be used in conjunction with the present arrangement. All autofocus systems adjust the lenses so that the image in the focus-plain is sharp. This can also be done manually. Most autofocus systems try to focus the target in a closed loop manner and adjust the lens package until the image is sharp. The focus distance may be derived from either a closed-loop signal or feedback from the lens-package for input to the Audio-to-Zoom adaptation control circuit 300. Plenoptic camera systems, also called Lightfield cameras are able to include the ability to focus later during display. There is a description of such a system later.

2) **Zoom factor:** This signal is derived from either the lens package, if the lenses are adjusted manually; from an electric zoom control, if the lenses are moved electronically; or from a user control varying the zoom factor electronically. This signal is used for detecting whether an overview or a long shot is being taken. Zoom is generally manually controlled.

3) **Input Selection signal:** An input selection signal may be provided to select a mode and/or add parameters such as intensity of the effect and application point in relationship to focus distance and zoom factor. The input selection signal may be received from a user of the device 100. The mixing ratio of the microphones may be influenced by the input signal. The input signal may also control recording of the adapted audio in a first audio track and traditional audio in a second audio track.

These three signals may be used by the Audio-to-Zoom circuit 320 to generate a delay control signal for delaying the audio and video in relation to each other. These signals may also be used by the Audio-to-Zoom circuit 320 to generate a control signal that controls mixing of the microphones 170 having different ranges, positions and directions. Normally, video processing takes longer than audio processing and thus the audio signal is generally delayed, this delay may be altered based on the Focus distance, Zoom factor and input selection signal to account for the use of a zoom feature and the distance of the subject being recorded from the video device. Delaying video and audio in modern digital systems using streaming (MPEG, H264, etc.) can be performed before coding in a traditional manner by delaying in the time domain as well as setting presentation time stamps correctly in the video domain. An overview of exemplary actions performed by the audio-to-zoom adaptation control circuit 300 based on different scenarios is depicted in Table 2. The distances are exemplary and may vary for different applications as well as the actions (delay and filtering) that are taken.

Table 2

| Figure | Style | Delay adaptation | Sound-Mix |
|---|---|---|---|
| Fig. 1A | Wide angle shot (2-5m) | none | Standard microphone mix |
| Fig. 1B | Wide angle shot (5-20m) | none | Microphone mix with an emphasis on front, directed microphone used |
| Fig. 1C | Tele shot, short range (2-5m) | none | Microphone mix with emphasis on front microphone |
| Fig. 1D | Long Shot (5-20m) | Delay adopted in relationship to focus distance and user preference | Strong emphasis on the directed front microphone |

In Fig. 1A, a wide angle shot is taken. The video device 10 is shown at a short distance of 1-3 m from the subject 12 being recorded. At this distance the audio delay may be less than 10 ms and virtually imperceptible to the human ear. Thus, no delay need be adopted and a standard mix of the microphones may be used to generate the audio. Fig. 1 B depicts a wide angle shot being taken of the subject 16 at a distance from the video device 14. The video device 14 is positioned at a distance of 5-20 m from the subject 16. At this distance the audio delay may be between 15-66 ms. As the subject 16 is viewed to be a distance away, the audio delay appears to be "normal" and thus no delay need be adopted based on this scenario. A mix of the microphones 170 with an emphasis on the front, directed microphone may be used to generate the audio for this scenario. The emphasis on the front, directed microphone enables capture of audio from the subject being recorded and lessens the effect of "noise" or sound surrounding the device affecting the audio. Use of a telephoto lens is shown in Fig. 1C. The video device 18 is shown with the subject 20 being positioned at a range of about 1-3 m therefrom. This distance of the subject 20 from the video device 18 produces an audio delay of less than 10 ms. The audio delay is imperceptible and thus no delay need be adopted based on this scenario. A mix of the microphones with an emphasis on the front, directed microphone may be used to generate the audio for this scenario. The emphasis on the front, directed microphone enables capture of audio from the subject being recorded and lessens the effect of "noise" or sound surrounding the device affecting the audio. In Fig. 1D, a telephoto lens is used for a long shot using a zoom function. The video device 22 is shown with the subject 24 at a distance of between 5-20 m therefrom. At this distance the audio delay may be between 15-66 ms. The zoom function creates the appearance that the subject 24 is much closer to the video device 22 than in actuality. The appearance of the subject 24 being closer to the video device 22 creates the expectation that the audio will not be delayed from and will be synchronized with the video. However, as the subject 24 is actually further away than perceived, there is a detectable delay in the audio with respect to the video making it necessary to synchronize the audio and video. In this scenario, a delay should be adopted based on the focus distance and relationship of the subject to the device as well as on preferences identified by the input selection signal. Additionally, due to the distance of the subject 24 from the video device 22, the possibility of sound or "noise" surrounding the video device being captured by microphones of the video device 22 is possible. Fig. 1D shows people 26 positioned around the video device 22 creating "noise" that may also need to be filtered. A mix of the microphones with a strong emphasis on the front, directed microphone may be used to generate the audio for this scenario. The strong emphasis on the front, directed microphone enables capture of audio from the subject 24 being recorded and greatly reduces the effect of "noise" or sound surrounding the device affecting the audio. The transitions from each scenario may be fluent as well as their parameters.

Further, signals from the microphones may be compared and analyzed for individual processing of the detected sound sources in addition to the individually adopted delay of the microphones for increasing the sound of the video. In a simplified example, the directed, front microphone may also pick up sound from sides and behind the video device. The undirected, front microphone may pick up a cloud of sounds from all sound sources as illustrated in Fig. 1D. Subtracting a small amount of the sounds picked up by the undirected, front microphone from the directed, front microphone with the correct signal phase may sharpen the signal of the directed, front microphone creating an even further directed signal.

In Figure 3, the video processing circuit 310 receives images and video from the image sensor 180 and processes the video signal. The audio processor 330 receives audio signals from the directional, front microphone 360, the front microphone 370 and the side microphones 380 and processes these signals. The audio-to-zoom circuit 320 receives the focus distance signal from at least one of the microprocessor 230 and lens package 200, the zoom factor signal from the lens package 200 or from the lens control via input device 390 and the input selection signal from input device 390. The input device 390 may be any of but not limited to a keyboard, a mouse, a user interface including a touch screen display, a voice control system, a gaze control (viewing direction) system, etc. The input device 390 may be used to input control settings identifying a preferred sound source or mixing ratio for the microphones as well as other control parameters. The audio-to-zoom circuit 320 generates and provides a mixing control signal to the audio processor 330 in response to the input control settings received from the input device 390. The mixing control signal is used by the audio processor 330 for mixing the audio signals received by the audio processor 330 from the directional, front microphone 360, the undirected, front microphone 370 and the side microphone 380 to generate a processed and mixed audio signal. Mixing is a known process of amplifying the signals, filtering the spectral signals and matching delays of signals received from the microphones, even nonlinearities might be applied to the audio signal. The audio processor 330 provides the processed and mixed audio signal to the variable delay circuit 340. The Audio-to-zoom circuit 320 further analyzes the focus distance signal, the zoom factor signal and the input selection signal to determine a delay imparted to the audio signal based on the determined distance of the subject from the video device 100 to generate a delay control signal. The Audio-to-zoom circuit 320 may also take into consideration the difference in processing times of the video signal and the audio signal as well as other factors when generating the delay control signal. The audio-to-zoom circuit 320 provides the delay control signal to the variable delay circuit 340 for adjusting a delay imparted to the processed and mixed audio signal by the variable delay circuit 340. The processed video signal and the delayed processed and mixed audio signal are provided to the audio and video combining circuit 350 which combines these signals into a synchronized audio/video signal for output to any of the EPROM/RAM 160, memory 130, video output 140 and WiFi/Bluetooth circuit 150.

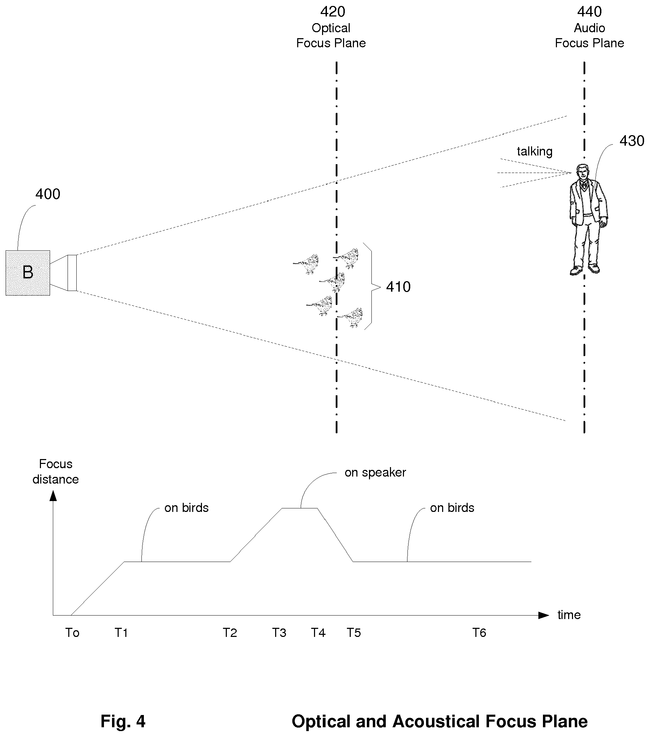

Figure 4 illustrates a further exemplary scenario for use of the device 100. This figure depicts a video device 400 taking a long shot using a zoom function where the optical focus and audio focus are at different distances. In this example, it is desired to have the optical focus on the group of birds 410 and the audio or acoustical focus on the person 430. The group of birds 410 are depicted positioned on an optical focus plane 420 and the person 430 is depicted positioned at a distance from the group of birds 410 on an audio focus plane 440. The focus of the video will be on the group of birds 410 and the focus of the microphones will be on the person 430. The preferred sound source (the audio focus plane) may be selected using the input device 390 through a finger touch on a touch screen user interface of or connected to the video device. Alternatively, the selection may also be through a pointer moved on the touch screen user interface, using keys on a keyboard or possibly using eye tracking of the user by the video device. After the preferred sound source is selected, the video device may then focus on the subject for audio focus to evaluate the distance of the subject from the video device. The video device 400 may then switch to focus on the optical focus subject for recording. The timing diagram in Figure 4 illustrates the focus distance of the video device 400 with respect to time when obtaining the necessary signals for calculating the variable delay signal. At time T0 the video device 400 is aimed at the subject to be filmed, i.e. the group of birds 410. At time T1 the auto-focus selects the optical focus plane 420 according to rules for the video device or input selection signals received from the input device and calculates a distance between the optical focus plane 420 and the video device 400. At time T2 the preferred audio focus subject, i.e. the person 430, is selected using the input device. At time T3 the video device 400 zooms to focus on and calculate a distance between the video device 400 and the audio focus subject 430. The calculated distance may be saved in the memory. At time T4 the video device 400 zooms back to the optical focus plane, correcting the calculated distance if necessary, and prepares for recording video at time T5. At time T6 recording of video begins with the optical focus and audio focus values being used independently by the video device. When recording, the video device retrieves the calculated distance from memory and determines a delay time for the audio signal captured from the audio subject to be synchronized with the video signal. During recording the optical focus may be adopted by the video device or manually. The audio zoom cannot be adjusted automatically by the video device. During a shot (video) the zoom and the optical focus are working constantly to output a sharp picture. Automatically measuring and adjusting the audio focus distance would change the lens position and thus change the optical focus for distance creating a visible distortion in the video image. However, manual correction of the audio focus distance may be performed as well as measuring via a second optical system.

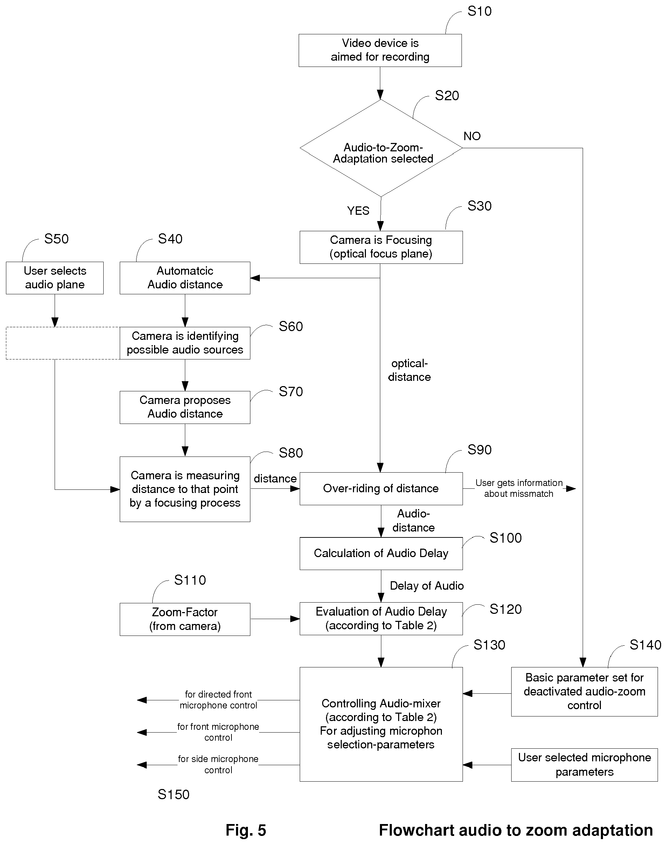

A flow chart describing the audio-to-zoom adaptation is provided in Figure 5. At step S10 the video device is aimed for recording a subject. At step S20, it is determined if Audio-to-zoom adaptation is selected. If Audio-to-zoom adaptation is not selected, basic parameters are set for deactivating the Audio-to-zoom control in S140. A control signal for controlling mixing of the microphones is then received by the audio processor at S130 and the microphone amplifiers for the directed, front microphone; front microphone; and side microphone are adjusted at S150. If Audio-to-zoom adaptation is selected, the video device is set to focus on the optical focus plane and determine the distance to the subject from the video device in S30. An automatic audio distance is set based on the determined distance to the optical plane in S40. In S50, the video device determines if an input selection signal is received identifying an audio plane and in S60 possible audio sources along the selected audio plane are identified. A distance to the selected audio plane is proposed in S70. In S80, the video device measures a distance to the determined audio source along with the selected audio plane using a focusing process. The determined optical distance is compared with the measured distance to the audio plane in S90. Instead of a measurement process the system approximates the distance based on recognition of known object sizes, and camera angle. If it is determined the optical distance and the measured distance to the audio plane are not the same, the user of the video device is informed of the mismatching of the distance. The measured distance to the audio plane is then used to calculate the audio delay and the audio is delayed based on the calculated delay in S100. A zoom factor signal is received from the lens package in S110 and in S120 the audio delay with respect to the video is evaluated according to the information provided in Table 2 above. A control signal for mixing the audio received from the directed, front microphone; front microphone; and side microphone is generated based on the evaluation and the information in Table 2 and provided to control the audio mixing in S130. An exemplary method for calculating the additional audio delay (AAD) may be calculated as follows:

The total audio delay = video delay 130) – audio processing delay (330) – AAD (320)

wherein, c = the speed of sound (approx. 331 m/second); OFD = optical Focus distance; AFD = audio focus distance (in most cases AFD = OFD); and AAD = AFD/c

If the result is negative, the video must be delayed until the result is "0" or positive. Based on the air temperature, the speed of sound (c) used in the above calculation may be adjusted according to c = 331 m/s + 0.6m/s * temperature (Celcius). If the camera is water proof and the video is taken submerged, a different speed of sound speed based on the liquid medium of water may be applied (1500m/s).

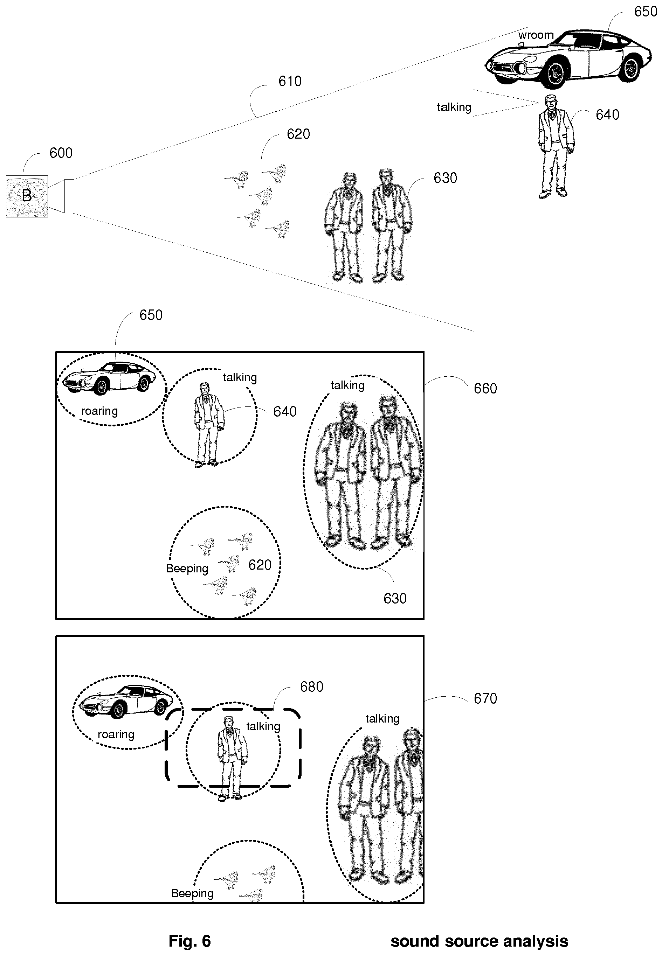

Figure 6 illustrates an example of the video device identifying possible audio sources along the selected audio plane as shown in S60 of Figure 5. As can be seen from this Figure, the video device 600 is taking a long shot which includes a number of subjects within its view area 610. The video device 600 is able to identify a group of birds 620, a pair of people 630 on one side of the view area, another person 640 further away from the video device and a vehicle 650 furthest away from the video device 600. Each of the subjects identified are generating audio and are depicted in the box labelled 660. The vehicle 650 is generating a roaring sound from its engine revving, the person 640 is talking, the pair of people 630 are also talking and the group of birds 620 are chirping. The video device 600 analyzes each of the identified subjects and determines a distance of each subject therefrom. Based on the determined distance of each identified subject and an input selection signal identifying an audio plane, the video device determines the subject from which it is desired to receive the audio signals. The determined subject is identified by the Audio focus window 680 in box 670.

In a further embodiment, not only is the audio focus depth measured but also the direction is determined. This direction does not need to be in line with the optical axis of the recording. In the case of selecting the audio focus to the pair of people 630 but aiming the camera at the single person 640 a deviation of the direction is evident. By an intelligent mixing of the microphones a direction from which the source of the audio signal is originating is recognizable. This improved signal is properly delayed and recorded.

In an alternate embodiment, the adaptation parameters may be written into the meta-data of the image or video file. Additionally, other parameters including but not limited to camera type, shutter speed, aperture, GPS coordinates etc. may also be written into the meta-data of the image or video file.

In a further alternate embodiment, at least two audio tracks may be recorded. A first audio track including the originally captured sound without adaptation may be recorded and a second audio track including the captured sound mixed and including the delay. If different audio channels are used, recording of the adaptation parameters may be performed in parallel with the recorded audio channel(s). The adaptation parameters do require less data space than an audio stream. In particular, plenoptic recordings with the ability to adjust the focus at varying times use multiple audio tracks with different audio focus depths. The recording of one or more additional audio tracks will be useful. The user can not only select a new optical focus distance (objects being displayed sharp) but also adjust the audio to that different optical focus depth.

For a plenoptics audio recording two basic approaches are possible. All microphones are recorded and the mixing process is done later, or according to Fig. 6 one or more additional audio focus planes or points for recording can be selected. The focus point is advantageous over the focus plane by enabling not only focusing of the audio distance but also a direction by use of several microphones.

Although embodiments which incorporate the teachings of the present disclosure have been shown and described in detail herein, those skilled in the art can readily devise many other varied embodiments that still incorporate these teachings. Having described preferred embodiments of a system and method for enhancing content (which are intended to be illustrative and not limiting), it is noted that modifications and variations can be made by persons skilled in the art in light of the above teachings. It is therefore to be understood that changes may be made in the particular embodiments of the disclosure which are within the scope of the disclosure as outlined by the appended claims.

**Claims**

1.   A device (100), comprising:

an image sensor (160);
at least one lens (200) coupled to a focus control (210) providing a zoom factor;
at least one microphone (170); and
a processor (230), wherein the processor is configured to adaptively match audio signals recorded by the at least one microphone with respect to video images recorded by the image sensor, based on the zoom factor.

2.   The device of claim 1, wherein the processor includes an audio to zoom adaptation circuit (300) configured to delay the audio signals with respect to the video images recorded by the image sensor, based on a distance of a subject of the video images from the device and the zoom factor of the at least one lens.

3.   The device according to any of claims 1 or 2, wherein the audio to zoom adaptation circuit includes:

a control circuit (320) configured to receive a focus distance signal, a zoom factor signal representative of the zoom factor and an input selection signal and to generate, in response, a delay control signal and an audio mixing signal;
an audio processor (350) configured to receive audio signals, from the at least one microphone, and the audio mixing signal and to generate in response, a mixed audio signal; and
a variable delay circuit (340) configured to receive the mixed audio signal and the delay control signal and delay the mixed audio signal based on the delay control signal.

4.   The device according to claim 2 or 3, wherein the audio to zoom circuit is configured to vary the delay of the audio signals to the recorded video images when the at least one lens is performing a zoom operation.

5.   The device according to any of claims 1-4, wherein the processor is further configured to identify an audio source supplying the audio signals and determine a distance of the audio source from the device upon receipt of an input audio selection signal identifying an audio plane and adaptively match the audio signals to the video images based on the determined distance of the audio source.

6.   The device according to any of claims 2-5, wherein the audio to zoom adaptation circuit is configured to delay audio delay based on at least one of air temperature and a medium in which the device is positioned.

7.   The device according to any of claims 1-6, wherein the audio is recorded as at least one of
a delayed audio signal; and
an audio signal together with an audio delay or distance information.

8.   The device according to any of claims 1-7, wherein the device is a Plenoptic camera system and at least two audio channels are recorded with a different delay or playout information.

9.   A method, comprising:

focusing on a subject using an image sensor coupled to at least one lens having a zoom factor;
recording video signals of the subject using the image sensor;
recording audio signals using at least one microphone;
matching the audio signals recorded by the at least one microphone with respect to the video signals recorded by the image sensor, based on the zoom factor, using a processor.

10. The method of claim 9, wherein matching the audio signals to the video signals includes:

determining a distance of the subject from the image sensor; and
variably delaying the audio signals with respect to the video signals based on the determined distance and the zoom factor of the at least one lens.

11. The method according to claim 10, wherein the at least one microphone includes at least one of a directional front microphone; a front microphone; and a side microphone and varying the delay of the audio signals to the video signals further includes:

receiving a focus distance signal, a zoom factor signal representative of the zoom factor and an input selection signal;
generating a delay control signal and a mixing signal based on at least one of the focus distance signal, zoom factor signal and input selection signal;
generating a mixed audio signal based on audio signals received from at least one of the directional front microphone; the front microphone; the side microphone and the mixing signal; and
delaying the mixed audio signal based on the delay control signal.

12. The method according to any of claims 10-11, wherein matching the audio signals to the video signals further includes:

combining the delayed mixed audio signal and the video signal to form an audio/video signal.

13. The method according to any of claims 9-12, wherein matching the audio signals to the video images is performed when the at least one lens is performing a zoom operation.

14. The method according to any of claims 9-13, wherein, when a source of the audio signals is at a different distance from the image sensor than the subject, the method further comprising:

identifying the source of the audio signals;
determining a distance of the source of the audio signals from the device upon receipt of an input audio selection signal; and
varying a delay of the audio signals to the video signals based on the determined distance of the source of the audio signals.

15. A computer program product for a programmable apparatus, the computer program product comprising a sequence of instructions for implementing a method according to any one of claims 9 to 14 when loaded into and executed by the programmable apparatus.

Fig. 1A

Fig. 1B

Fig. 1C

Fig. 1D

160

170

**100**

| | |
|---|---|
| 110 Battery | EPROM RAM (160) |
| 190 GPS | |

Microphones front / side / front-directional

110
Battery

120
Power management

130
Memory

140
Video output

150
WiFi
Bluetooth

230

DSP
&
Micro
Processor

300

Audio-to-
Zoom-
adaptation
(Fig. 3)

200

160

Image
Sensor

Lense
package

Zoom factor

240
Display / User interface

Focus control

220
Servo
control

Auto
Focus
drive

210

## Fig. 2            Block Diagram (Camera or Camera section)

Fig. 3            Audio to zoom adaptation

420
Optical
Focus Plane

440
Audio
Focus Plane

430

talking

400

B

410

Focus
distance

on speaker

on birds

on birds

time

To    T1              T2      T3   T4   T5              T6

**Fig. 4**                    **Optical and Acoustical Focus Plane**

S10

Video device is
aimed for recording

S20

Audio-to-Zoom-
Adaptation selected

NO

YES

S30

Camera is Focusing
(optical focus plane)

S50

User selects
audio plane

S40

Automatcic
Audio distance

S60

Camera is identifying
possible audio sources

optical-
distance

S70

Camera proposes
Audio distance

S80

Camera is measuring
distance to that point
by a focusing process

distance

S90

Over-riding of distance

User gets information
about missmatch

Audio-
distance

S100

Calculation of Audio Delay

S110

Zoom-Factor
(from camera)

Delay of Audio

Evaluation of Audio Delay
(according to Table 2)

S120

S130

S140

Basic parameter set for
deactivated audio-zoom
control

for directed front
microphone control

for front microphone
control

for side microphone
control

Controlling Audio-mixer
(according to Table 2)
For adjusting microphon
selection-parameters

User selected microphone
parameters

S150

Fig. 5          Flowchart audio to zoom adaptation

650

wroom

610

640

620

600

B

talking

630

650

talking

roaring

talking

660

640

Beeping

620

630

680

670

roaring

talking

talking

Beeping

**Fig. 6**                    **sound source analysis**

Europäisches
Patentamt

European
Patent Office

Office européen
des brevets

# EUROPEAN SEARCH REPORT

Application Number

EP 16 30 6748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/207277 A1 (KURIHARA JUNJI [JP] ET AL) 20 August 2009 (2009-08-20) | 1,2,4,6, 7,9,10, 12,13,15 | INV.<br>H04N5/915<br>H04N5/04 |
| Y | * paragraph [0022] - paragraph [0054] *<br>* figures 1-10 * | 3,5,8, 11,14 | H04N5/232 |
| Y | US 2008/247567 A1 (KJOLERBAKKEN MORGAN [NO] ET AL) 9 October 2008 (2008-10-09)<br>* paragraph [0031] - paragraph [0055] *<br>* figure 1 * | 3,11 | |
| Y | US 2010/123785 A1 (CHEN SHAOHAI [US] ET AL) 20 May 2010 (2010-05-20)<br>* paragraph [0008] *<br>* paragraph [0018] - paragraph [0032] *<br>* figures 1-13 * | 5,14 | |
| Y | US 2014/064710 A1 (IKEDA SHINGO [JP])<br>6 March 2014 (2014-03-06)<br>* paragraph [0022] - paragraph [0099]; figures 1-3 *<br>* paragraph [0018] - paragraph [0032] * | 8 | TECHNICAL FIELDS SEARCHED (IPC)<br><br>H04N<br>G03B |
| X | JP 2009 130767 A (PANASONIC CORP)<br>11 June 2009 (2009-06-11)<br><br>* paragraph [0010] - paragraph [0040] *<br>* figures 1-4 * | 1,2,4,7, 9,10,12, 13,15 | |
| X | JP 2008 048374 A (VICTOR COMPANY OF JAPAN)<br>28 February 2008 (2008-02-28)<br><br>* paragraph [0006] - paragraph [0007] *<br>* paragraph [0009] - paragraph [0038] *<br>* figures 1-10 * | 1,2,4,7, 9,10,12, 13,15 | |

-/--

The present search report has been drawn up for all claims

| Place of search | Date of completion of the search | Examiner |
|---|---|---|
| The Hague | 15 June 2017 | Rocca, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 30 6748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H08 298609 A (SANYO ELECTRIC CO) 12 November 1996 (1996-11-12)<br><br>* paragraph [0015] - paragraph [0034] *<br>* figures 1-6 *<br>----- | 1,2,4,7,9,10,13,15 | |

TECHNICAL FIELDS
SEARCHED       (IPC)

The present search report has been drawn up for all claims

| Place of search | Date of completion of the search | Examiner |
|---|---|---|
| The Hague | 15 June 2017 | Rocca, Delphine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6748

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2017

| Patent document cited in search report | | | Publication date | Patent family member(s) | | | Publication date |
|---|---|---|---|---|---|---|---|
| US 2009207277 | A1 | | 20-08-2009 | NONE | | | |
| US 2008247567 | A1 | | 09-10-2008 | EA | 200800965 | A1 | 30-10-2008 |
| | | | | EP | 1946606 | A1 | 23-07-2008 |
| | | | | US | 2008247567 | A1 | 09-10-2008 |
| | | | | WO | 2007037700 | A1 | 05-04-2007 |
| US 2010123785 | A1 | | 20-05-2010 | NONE | | | |
| US 2014064710 | A1 | | 06-03-2014 | JP | 6012342 | B2 | 25-10-2016 |
| | | | | JP | 2014050005 | A | 17-03-2014 |
| | | | | US | 2014064710 | A1 | 06-03-2014 |
| JP 2009130767 | A | | 11-06-2009 | NONE | | | |
| JP 2008048374 | A | | 28-02-2008 | NONE | | | |
| JP H08298609 | A | | 12-11-1996 | NONE | | | |

EPO FORM P0459

For more details about this annex : see Official Journal of the European Patent Office, No. 12/82